# EUROPEAN PATENT APPLICATION

(11) **EP 4 610 059 A1**
(43) Date of publication of application: **03.09.2025**
(21) Application number: 25156450.6
(22) Date of filing: 07.02.2025
(51) Int. Cl.: B60B 33/00, F16B 5/02, F16B 12/50

(54) **CASTOR WHEEL FOR A SHELVING UNIT**

(30) Priority: 28.02.2024 IT 202400004324
(71) Applicant: Fami S.R.L., 36027 Rosà (VI) (IT)
(72) Inventor: FIETTA, Marco, 36056 Tezze sul Brenta (VI) (IT)
(74) Representative: Paparo, Aldo

(57) **Abstract**

Intermediate fixing bracket (10) for castor wheels (1) for shelving units (100), comprising a supporting portion (20) having an upper surface (21), configured to be applied to a lower wall (101) of a shelving unit (100), and a lower surface (22), configured to be fixed at least to one anchoring plate (3) of a castor wheel (2). The intermediate bracket (10) further comprises an anchoring portion (30), connected to the supporting portion (20) and extending transversely away from the upper surface (21) of the supporting portion (20). The anchoring portion (30) has an abutment surface (31), configured to be applied to a vertical wall (102) of the shelving unit (100).

## Description

The present invention relates to the manufacturing sector and to an intermediate fixing bracket for castor wheels for shelving units and also to a castor wheel for shelving units.

In the pertinent sector of the present invention, there is a keenly felt need to develop convenient and efficient methods for the movement of shelving units. Shelving units are a fundamental element in numerous contexts, which range from the industrial field to the commercial and logistics ones. However, their transport and their movement often prove to be complex and laborious, particularly in environments where a constant reconfiguration of spaces or frequent transfer of the goods is required. Typically, lightweight shelving units or those of reduced dimensions are moved manually. This can require lifting or moving by one or several people. Typically, for heavier shelving units, on the other hand, means such as trucks or pallet trucks can be used to facilitate their movement. These means can help to reduce the physical effort required and to make the process more efficient. However, the systems described above have several disadvantages which make their use not without problems. In manual transport of the shelving units, the main problem encountered is linked to safety and to the risk of injury for the operators. Lifting and moving heavy objects manually can, in fact, cause excessive efforts, muscle tension or injuries to the back. Insofar as concerns the use of manual equipment, such as manual trucks or pallet trucks, on the other hand, various practical problems can occur. For example, the trucks might not be suitable for getting around obstacles, narrow spaces or over uneven ground, limiting their usefulness in certain environments.

For this reason, in the pertinent sector of the present invention, the use of castor wheels directly fixable to the base of the shelving units has been developed. However, the Applicant has found that, even in the most modern implementations, the system described above has several structural and functional drawbacks that make it improvable.

Castor wheels allow shelving units to be moved with relative ease in various directions, but can also undermine the stability of the structure. If the wheels are not of high quality or if the base of the shelving units is designed inadequately, there could be a risk of overturning during movement or a risk of collapse of the wheels, especially if the shelving units are loaded with heavy objects or are high. In particular, these structures might not have a structural base that is suitable or arranged to accommodate the wheels, requiring modifications that could result in additional costs and interruption of the stocking operations. Furthermore, installation of the wheels could require specialist skills and interruptions of operations.

In this context, the technical task of the present invention is therefore to provide an intermediate fixing bracket for castor wheels and also a castor wheel that are free from the drawbacks complained of in the prior art.

An object of the present invention is therefore to provide an intermediate fixing bracket for castor wheels and also a castor wheel that have a simplified structure, in particular by minimising the number of components, and that are sturdy at the same time.

A further object of the present invention is to provide an intermediate fixing bracket for castor wheels and also a castor wheel that are versatile and applicable also to shelving units not arranged for that purpose.

A further object of the present invention is to provide an intermediate fixing bracket for castor wheels and also a castor wheel that are easily installable.

A further object of the present invention is to provide an intermediate fixing bracket for castor wheels and also a castor wheel that are inexpensive. The objects are substantially achieved by an intermediate fixing bracket for castor wheels and also a castor wheel in accordance with the features set forth respectively in the accompanying claim 1, 10 and/or in one or more of the claims dependent thereon.

Further features and advantages of the present invention will become more apparent from the indicative and thus non-limiting description of a preferred, but not exclusive, embodiment of an intermediate fixing bracket for castor wheels and also a castor wheel, as illustrated in the accompanying drawings, in which:
- Figure 1 shows a perspective view of a preferred embodiment of an intermediate fixing bracket for castor wheels;
- Figures 2, 3 and 4 show respective views of the embodiment of the intermediate bracket of Figure 1;
- Figures 5 and 6 show respective perspective views of the intermediate bracket of Figure 1 applied to a shelving unit;
- Figure 7 shows a plate-shaped body from which the intermediate bracket of Figure 1 can be obtained;
- Figure 8 shows a perspective view of a preferred embodiment of a castor wheel for shelving units in accordance with the present invention;
- Figure 9 shows a perspective view of a shelving unit on which the four castor wheels of Figure 8 are installed.

With reference to the accompany figures, the reference number 10 has been used to designate an intermediate fixing bracket for castor wheels for shelving units.

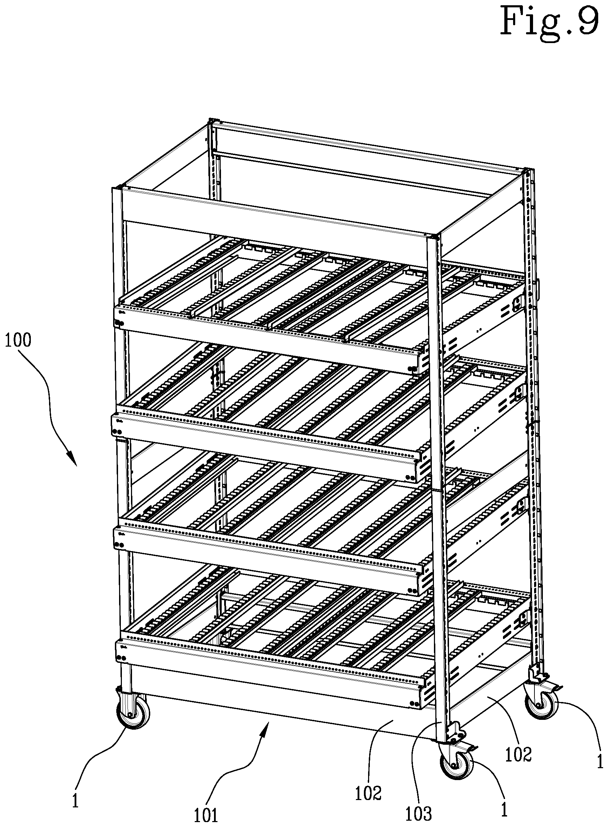

In the context of the present invention, the term "shelving units" is intended to mean structures designed for the storage of objects, goods or materials in an organised and accessible manner. In accordance with the general features of the invention, these shelving units can be manufactured in a variety of materials, such as metal, wood or plastic, and can be used in a vast range of contexts, including warehouses, retail shops, offices, home garages and others. Shelving units are essential for optimising the storage space, facilitating access to the articles and maintaining order in work or home environments. Preferably, in the present invention, the shelving units are intended as being made of metal. An example of a shelving unit 100 is illustrated in Figure 9.

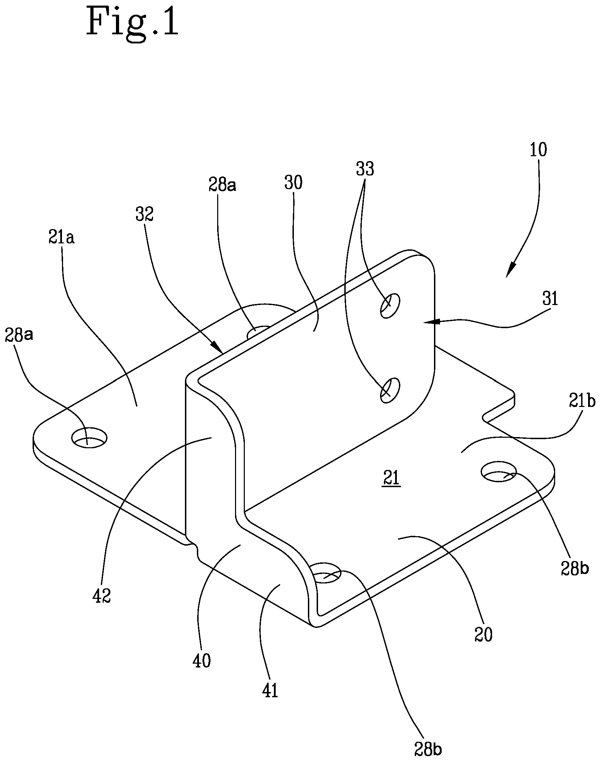

As visible from Figures 1 to 4, the intermediate bracket 10 comprises a supporting portion 20 with a plate-like shape.

In the present description, the expression "plate-like shape" is intended to mean that the supporting portion 20 has a flat or approximately flat shape. The supporting portion 20 extends predominantly in length and breadth and has a negligible thickness with respect to the length and the height.

The supporting portion 20 has an upper surface 21, configured to be applied to a lower wall 101 of a shelving unit 100, and a lower surface 22, opposite the upper surface 21, configured to be fixed to an anchoring plate 3 of a castor wheel 2.

In the present description, the expression "lower wall" is intended to mean the base of the shelving unit 100, i.e. the lower surface of the structure on which the entire shelving unit 100 rests.

In use, the upper surface 21 of the supporting portion 20 is at least partially in abutment with the lower wall 101 of the shelving unit 100, which defines the supporting base of the shelving unit 100 itself. Also, in use, the lower surface 22 of the supporting portion 20 is at least partially in abutment with the upper surface of the anchoring plate 3 of the castor wheel 2.

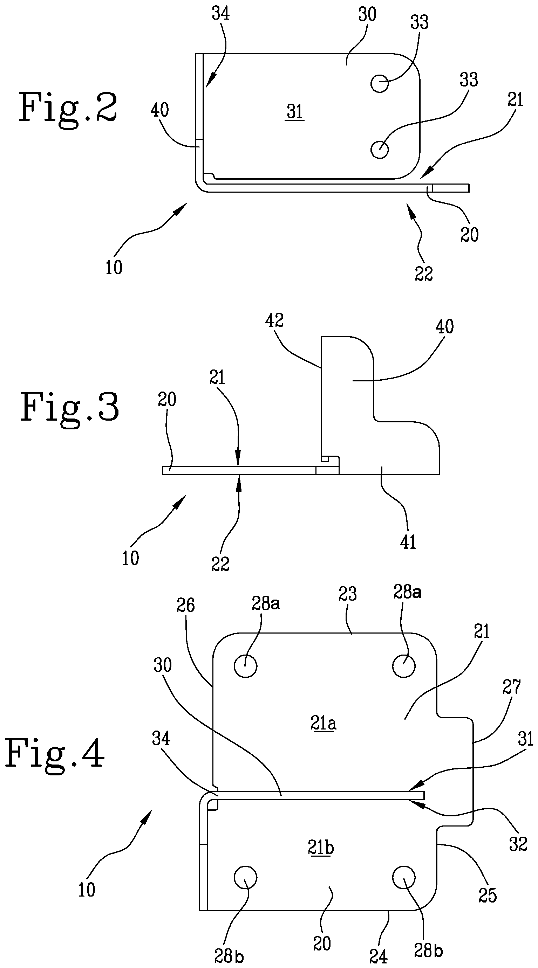

As visible in particular from Figure 4, preferably, the supporting portion 20 has a substantially quadrilateral plan shape: the supporting portion 20 has a first pair of sides 23, 24 reciprocally opposite and parallel to each other, and a second pair of sides 25, 26, also reciprocally opposite and parallel to each other. The first pair of sides 23, 24 is perpendicular to said second pair of sides 25, 26.

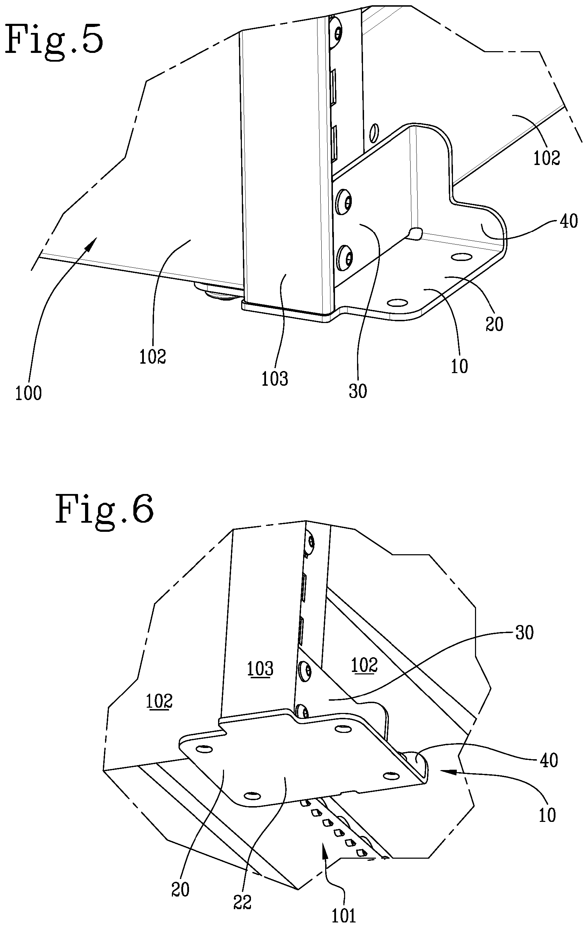

Preferably, furthermore, on one of the sides 25 of the supporting portion 20, a protuberance 27 may also be provided, configured to abut with a shoulder of the shelving unit, as illustrated in Figures 5 and 6.

The supporting portion 20 has at least one through hole 28a, 28b configured to house fixing members for fixing, in use, the supporting portion 20 with the aforesaid castor wheel 2, so as to rigidly constrain the supporting portion 20 to the anchoring plate 3 of the castor wheel 2. In other words, the castor wheel 2 (and in particular the anchoring plate 3 of the castor wheel 2) is anchored to the lower surface 22 of the supporting portion 20 by means of fixing members, such as screws and bolts for example.

Preferably, the supporting portion 20 has four through holes 28a, 28b obtained in a position such as to define, together, a square. In other words, the four holes 28a, 28b are positioned so that their relative positions create a square.

The intermediate bracket 10 further comprises an anchoring portion 30, connected to the supporting portion 20 and extending transversely away from the upper surface 21 of the supporting portion 20. Preferably, the anchoring portion 30 extends perpendicularly away from the upper surface 21 of the supporting portion 20.

Preferably, the anchoring portion 30 has a plate-like shape.

The anchoring portion 30 has an abutment surface 31, configured to be applied to a vertical wall 102 of the shelving unit 100. The anchoring portion 30 has a secondary surface 32, opposite to the first surface 31. The anchoring portion 30 has at least one through hole 33 configured to house fixing members for fixing, in use, the anchoring portion 30 to the vertical wall 102 of the shelving unit 100, so as to rigidly constrain the anchoring portion 30 to the vertical wall 102 of the shelving unit 100. Preferably, the anchoring portion 30 has a pair of holes 33, obtained in a position such as to be vertically aligned.

As illustrated in Figures 5 and 6, functionally, in use, the supporting portion 20 is oriented parallel to the ground, whereas the anchoring portion 30 extends vertically, preferably perpendicularly, to the ground. In particular, the upper surface 21 of the supporting portion 20 is at least partially in abutment with the lower wall 101 of the shelving unit 100, whereas the abutment surface 31 of the anchoring portion 30 is in abutment with the vertical wall 102 of the shelving unit 100. In other words, the upper surface 21 of the supporting portion 20 and the abutment surface 31 of the anchoring portion 30 substantially define an "L" shape, in the concavity of which an edge of the shelving unit 100 is housed, defined by the lower wall 101 of the shelving unit 100 together with the vertical wall 102 of the shelving unit 100. The anchoring portion 30 is therefore rigidly connected to the vertical wall 102 of the shelving unit 100 by means of fixing members stabilising the entire intermediate bracket 10.

In accordance with one aspect, the anchoring portion 30 can be arranged in a central region of the upper surface 21 of the supporting portion 20, so as to substantially divide the upper surface 21 into two sector 21a, 21b.

In particular, the anchoring portion 30 defines a first sector 21a of the upper surface 21 of the supporting portion 20 configured, in use, to be applied to the lower wall 101 of the shelving unit 100, and a second sector 21b configured, in use, to be arranged cantilevered from the vertical wall 102 of the shelving unit 100. Preferably, the first sector 21a has a greater extension than the second sector 21b.

Preferably, with reference to the aforesaid four holes 28a, 28b of the supporting portion 20 and as clearly visible in Figure 4, a first pair of holes 28a is obtained (and therefore arranged) in the first sector 21a and another pair of holes 28b, distinct from the holes 28a of the first pair of holes, is obtained (and therefore arranged) in the second sector 21b. In use, the pair of holes 28a obtained in the first sector 21a will be arranged underneath the lower wall 101 of the shelving unit 100, whereas the pair of holes 28b obtained in the second sector 21b will be arranged externally to the shelving unit 100. The intermediate bracket 10 can also be directly anchored to the lower wall 101 of the shelving unit 100, as will be clearer in the continuation of the present description.

Advantageously, such a technical feature allows a better distribution of the loads, especially on the castor wheel 2. Advantageously, furthermore, the arrangement of the holes 28a, 28b allows the installation of the intermediate bracket 10 to be facilitated. Advantageously, also, the intermediate bracket 10 is versatile and easily applicable to the shelving units 100.

In accordance with one aspect, the intermediate bracket 10 can have a connection portion 40 interposed between the supporting portion 20 and the anchoring portion 30.

Structurally, as illustrated in Figures 1 to 6, the connection portion 40 is connected to the supporting portion 20 and extends transversely, preferably perpendicularly, from one of the sides 26 of the supporting portion 20. The connection portion 40 is also connected to the anchoring portion 30 and extends transversely, preferably perpendicularly, from one end 34 of the anchoring portion 30. In such an embodiment, the supporting portion 20 and the anchoring portion 30 are not directly connected.

Preferably, the connection portion 40 has a substantially "L" shape. In particular, the connection portion 40 has a first branch 41, connected to the supporting portion 20, and a second branch 42, perpendicular to the first branch 21 and connected to the anchoring portion 30. Advantageously, the connection portion 40 facilitates obtaining of the intermediate bracket 10, as will be clearer in the continuation of the present description.

In accordance with one aspect, the intermediate bracket 10 can be made as one piece. In other words, the portions 20, 30, 40 are integral.

In accordance with one aspect, the intermediate bracket 10 can be made of metal. Preferably, the intermediate bracket 10 is made of aluminium.

In accordance with one aspect, the intermediate bracket 10 can be made by bending a plate-shaped body 200.

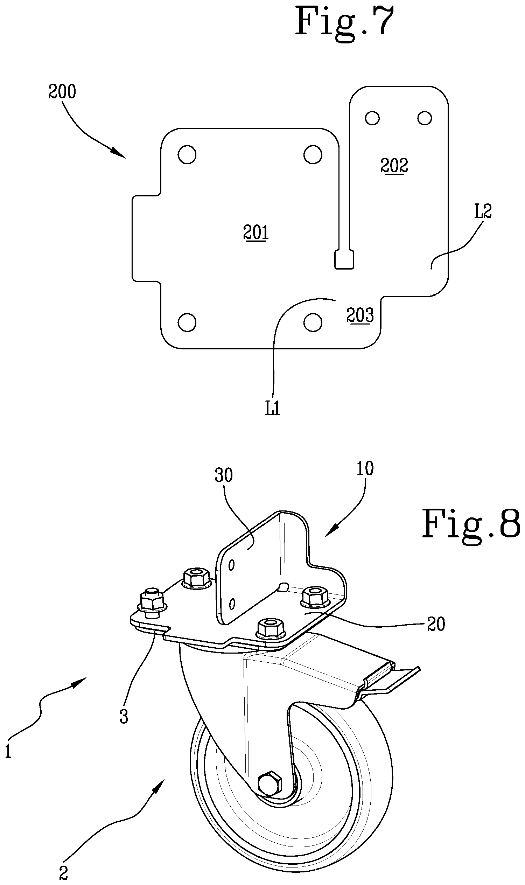

Said plate-shaped body is illustrated by way of example in Figure 7.

As visible, the plate-shaped body 200 comprises a main portion 201, a secondary portion 202 and a coupling portion 203. The three portions 201, 202, 203 are coplanar.

As can be clearly inferred from figure 6, in the production phase, a first bending is performed in proximity to a first bending line "L1", so that the secondary portion 202 and the coupling portion 203 define a perpendicular angle with the main portion 201. Subsequently, a second bending is performed in proximity to a second bending line "L2", so that the secondary portion 202 defines a perpendicular angle with the coupling portion 203. In an embodiment variant, the order of the two operations is reversed.

Independently of the order of the two operations, following the bending, the main portion 201 defines the supporting portion 20, the secondary portion 202 defines the anchoring portion 30, while the coupling portion 203 defines the connection portion 40.

Advantageously, these technical features make the intermediate bracket 10 extremely simple to manufacture and, consequently, inexpensive.

In accordance with a first example of use of the intermediate bracket 10, it can be stably applied to the shelving unit 100, as illustrated in Figures 5 and 6. In accordance with such use, the intermediate bracket 10 acts as a stand-alone castor wheel. The castor wheel 2 can be subsequently applied to the intermediate bracket 10 so as thus to define the aforementioned castor wheel 1 and place the shelving unit 100 in a configuration suitable for movement.

In accordance with a second example of use of the intermediate bracket 10, it can be stably fixed to the respective castor wheel 2 so as to define said castor wheel 1. As needed, the castor wheel 1 can be applied to the shelving unit 100 so as to place the shelving unit 100 in a configuration suitable for movement.

The present invention also relates to a castor wheel 1 for shelving units 100, illustrated by way of example in Figure 8.

The castor wheel 1 comprises an intermediate bracket 10 in accordance with what has been described above and a castor wheel 2, comprising an anchoring bracket 3, fixed to the lower surface 22 of the supporting portion 20 of the intermediate bracket 10 by means of fixing members.

In particular, the supporting portion 20 of the intermediate bracket 10 and the anchoring bracket 3 of the castor wheel 2 have respective through holes 28a, 28b reciprocally counter-shaped and configured to house fixing members for reciprocal fixing, in use, of the intermediate staff 10 and the castor wheel 2.

Preferably, the anchoring bracket 3 of the castor wheel 2 has four through holes obtained in a position such as to define, together, a square. Naturally, the holes of the anchoring bracket 3 are obtained in a position such as to match with the holes 28a, 28b of the supporting portion 20 of the intermediate bracket 10.

Preferably, the intermediate bracket 10 together with the castor wheel 2 can be stably anchored directly to the lower wall 101 of the shelving unit by means of holes 28a (and the respective holes on the anchoring plate 3 of the castor wheel 2) fixed to the lower wall 101 by means of fixing members. This feature makes the coupling of the castor wheels 1 with the shelving unit 100 more stable. This feature also enables the shelving unit 100 itself to be reinforced, as it improves the reciprocal constraint between the lower wall 101 100 and the vertical wall 102 and/or the reciprocal constraint between two adjacent vertical walls 102.

Figure 9, in conclusion, illustrates an exemplary and therefore non-limiting embodiment of the shelving unit 100. As shown in Figure 9, the shelving unit 100 has a lower wall 101 and four vertical walls 102. Four castor wheels 1 in accordance with the present invention are attached to the lower wall 101.

The present invention achieves the proposed objects, eliminating the highlighted drawbacks of the prior art.

## Claims

1. An intermediate fixing bracket (10) for castor wheels (1) for shelving units (100), comprising:
- a supporting portion (20) with a plate-like shape, having an upper surface (21), configured to be applied to a lower wall (101) of a shelving unit (100), and a lower surface (22), opposite the upper surface (21), configured to be fixed at least to an anchoring plate (3) of a castor wheel (2); said supporting portion (20) having at least one through hole (28a, 28b) configured to house fixing members for fixing, in use, with the castor wheel (2);
- an anchoring portion (30), connected to the supporting portion (20) and extending transversely away from the upper surface (21) of the supporting portion (20); said anchoring portion (30) having an abutment surface (31), configured to be applied to a vertical wall (102) of the shelving unit (100), and having at least one through hole (33) configured to house fixing members for fixing, in use, said anchoring portion (30) to said vertical wall (102) of said shelving unit (100).

2. The intermediate bracket (10) according to claim 1, wherein said anchoring portion (30) has a plate-like shape.

3. The intermediate bracket (10) according to claim 2, wherein said anchoring portion (30) is arranged in a central region of the upper surface (21) of said supporting portion (20), so as to substantially divide the upper surface (21) into two sectors (21a, 21b), said anchoring portion (30) defining a first sector (21a) of the upper surface (21) configured, in use, to be applied to the lower wall (101) of the shelving unit (100), and a second sector (21b) configured, in use, to be arranged cantilevered from the vertical wall (102) of the shelving unit (100); preferably, said first sector (21a) has a greater extension than said second sector (21b).

4. The intermediate bracket (10) according to any one of the preceding claims, wherein said supporting portion (20) has a substantially quadrilateral plan shape, said supporting portion (20) having a first pair of sides (23, 24) reciprocally opposite and parallel to each other, and a second pair of sides (25, 26), reciprocally opposite and parallel to each other; said first pair of sides (23, 24) being perpendicular to said second pair of sides (25, 26).

5. The intermediate bracket (10) according to claim 4, wherein said supporting portion (20) has four through holes (28a, 28b) made in a position such as to define, together, a square; a first pair of said holes (28a) being made in said first sector (21a) and a second pair of holes (28b), distinct from the holes of said first pair of holes (28), being made in said second sector (21b).

6. The intermediate bracket (10) according to any one of the preceding claims, wherein at least one hole (28a) of the supporting portion (20) is configured to house fixing members for fixing, in use, the supporting portion (20) with the lower wall (101) of the shelving unit (100).

7. The intermediate bracket (10) according to any one of the preceding claims, comprising a connection portion (40) interposed between the supporting portion (20) and the anchoring portion (30); said connection portion (40) being connected to said supporting portion (20) and extending transversely, preferably perpendicularly, from one side (26) of said supporting portion (20); said connection portion (40) also being connected to said anchoring portion (30) and extending transversely, preferably perpendicularly, from one end (34) of said anchoring portion (30).

8. The intermediate bracket (10) according to any one of the preceding claims, wherein the intermediate bracket (10) is made as one piece.

9. The intermediate bracket (10) according to claim 8, wherein said intermediate bracket (10) is made by bending a single plate-shaped body (200).

10. The intermediate bracket (10) according to any one of the preceding claims, wherein said intermediate bracket (10) is made of metal, preferably of aluminium.

11. A castor wheel (1) for shelving units, comprising:
- an intermediate bracket (10) according to any one of the preceding claims;
- a castor wheel (2) comprising an anchoring bracket (3), mounted onto the lower surface (22) of the supporting portion (20) of the intermediate bracket (10) by means of fixing members;
the supporting portion (20) of the intermediate bracket (10) and the anchoring plate (3) of the castor wheel (2) having respective through holes (28a, 28b) reciprocally counter-shaped and configured to house fixing members for reciprocal fixing, in use, of the intermediate staff (10) and the castor wheel (2).
